# EUROPEAN PATENT APPLICATION

(11) **EP 4 339 454 A1**
(43) Date of publication of application: **20.03.2024**
(21) Application number: 22382864.1
(22) Date of filing: 19.09.2022
(51) Int. Cl.: F03D 7/02

(54) **METHOD FOR OPERATING A WIND TURBINE, CONTROL SYSTEM AND WIND TURBINE**

(71) Applicant: Nordex Energy SE & Co. KG, 22419 Hamburg (DE); Nordex Energy Spain, S.A.U., 31395 Barasoain (Navarra) (ES)
(72) Inventor: MIRANDA SUESCUN, Edurne, Barasoain (Navarra) (ES); BOLEKO RIBAS, Salvador Expedito, Barasoain (Navarra) (ES); VERESS, Attila-Todor, Hamburg (DE); RUIZ ALDAMA, Alfonso, Barasoain (Navarra) (ES); OLONDRIZ ERDOZAIN, Joannes, Barasoain (Navarra) (ES); GARCIA BARACE, Alberto, Barasoain (Navarra) (ES)
(74) Representative: Epping - Hermann - Fischer

(57) **Abstract**

The method is for operating a wind turbine (100) having a rotor (10) with at least two rotor blades (1, 2, 3), a tower (20) and a pitch setting system (13). The method comprises a step, in which first information is provided which is representative for bending moments of the at least two rotor blades and the assigned positions of the rotor blades. In another step, second information is provided which is representative for maximum allowed bending moments of rotor blades when they are in a critical sector close to the tower. In yet another step, third information is determined depending on the first and the second information which is representative for whether the bending moment of at least one rotor blade exceeds the respective maximum allowed bending moment when said rotor blade is in the critical sector. If this is the case, an output signal is generated which is configured to cause the pitch setting system to individually change the pitch angles of the rotor blades in order to reduce a deflection of the rotor blades towards the tower when they pass the tower.

## Description

The present disclosure relates to a method for operating a wind turbine. Furthermore, the disclosure relates to a computer program, a computer-readable data carrier and a control device for performing the method for operating a wind turbine. Moreover, the present disclosure relates to a control system for operating a wind turbine and a wind turbine.

Wind turbines are widely known and are used to convert wind energy into electrical energy. The lengths of the rotor blades used in such wind turbines have increased in recent years. With the increasing lengths, the danger of a collision of the rotor blades with the tower has increased.

One object to be achieved is, therefore, to provide a method for operating a wind turbine which reduces the risk of a collision of the rotor blades with the tower. Further objects to be achieved are to provide a computer program, a computer-readable data carrier and a control device for performing such a method. Additional objects to be achieved are to provide a control system for operating a wind turbine with such a method and a wind turbine which is operable with such a method.

First, the method for operating a wind turbine is specified.

According to an embodiment, the method is for operating a wind turbine having a rotor with at least two rotor blades, a tower and a pitch setting system for individually setting the pitch angles of the at least two rotor blades. The method comprises a step, in which first information is provided. The first information is representative for bending moments of the at least two rotor blades and the assigned positions of the rotor blades. In another step, second information is provided. The second information is representative for maximum allowed bending moments of the at least two rotor blades when they are in a critical sector close to the tower. In yet another step, third information is determined depending on the first and the second information. The third information is representative for whether the bending moment of at least one rotor blade exceeds the respective maximum allowed bending moment when said rotor blade is in the critical sector. If this is the case, a further step is executed in which an output signal is generated. The output signal is configured to cause the pitch setting system to individually change the pitch angles of the rotor blades in order to reduce a deflection of the rotor blades towards the tower when they pass the tower.

The present invention is, inter alia, based on the recognition that a large bending moment of a rotor blade when it passes the tower bears a large risk of the rotor blade colliding with the tower. The inventors therefore had the idea to (temporarily) control the pitch angles of the rotor blades in order to reduce the bending moments of the rotor blades and thus to reduce the deflection of the rotor blades towards the tower when they pass the tower. However, the control of the pitch angles is only performed when a maximum allowed bending moment is exceeded in a critical sector close to the tower. In addition, the pitch angles are controlled individually instead of collectively. In this way, it is achieved, for example, that the deflection of a rotor blade is only reduced for the time interval in which it actually passes the tower and afterwards the pitch angle of said rotor blade can be set back to its initial, e.g. optimal, value. The pitch angles of the other rotor blades can thereby be maintained at their (optimum) pitch angles and their respective pitch angles are changed only when they are coming close to the tower. As a consequence, a good differentiation between uncritical production situations and tower clearance critical situations is obtained and, as a big advantage, the annual energy production (AEP) loss due to the pitching maneuver is kept relatively small. Furthermore, in this way a reduction of the main shaft loads can be achieved in sites with low or inverse horizontal shear where the resulting thrust force is not able to reduce the loads caused by the rotor blades weight.

The method specified herein is, in particular, a computer-implemented method, i.e. is performed by a computer or a processor.

Herein, if information is representative for a certain quantity or certain quantities, this means that the quantity or quantities can be extracted from the information, either directly, or the quantity/quantities can at least be derived from the information, particularly without using further information. In other words, the quantity/quantities is/are stored in the information or at least data are stored in the information from which the quantity/quantities can be derived or determined or calculated, respectively. Furthermore, here and in the following, information is, in particular, electronic information, like electronic data.

The bending moment of a rotor blade is herein meant to be the bending moment acting on the rotor blade and causing deflection of the rotor blade out of the rotor plane. The bending moment is, therefore, also referred to as "out of plane" bending moment. It is a quantity in a reference frame of the rotor blade. This means that it is a quantity of a reference frame rotating with the rotor blade, herein referred to as "rotating reference frame". The rotor plane is the plane in which the rotor blades rotate or the plane perpendicular to the rotational axis of the rotor, respectively.

When comparing bending moments, absolute values of the bending moments are, for example, compared.

The first information is, in particular, determined with the help of measurements. Consequently, the bending moments for which the first information is representative may be referred to as measured bending moments. It may be an estimation of the actual bending moment of the rotor blade. The first information may comprise the corresponding measurement data.

The first information is additionally representative for the positions of the rotor blades assigned to the bending moments. A position being assigned to a bending moment is, in particular, the position the rotor blade has when the measurements for the bending moment are taken. For example, the positions of the rotor blades are also determined from measurements, for example from measurements of the azimuthal position of the rotor. In particular, the first information is representative for the bending moments of the rotor blades as a function of their positions.

The second information is representative for (predetermined) maximum allowed bending moments of the at least two rotor blades when they are in a critical sector close to the tower. The maximum allowed bending moment may be the same for all rotor blades or may be different for the different rotor blades. The maximum allowed bending moments may be determined with the help of measurements of an actual wind turbine or may be determined with the help of simulations, for example.

The critical sector close to the tower is, in particular, an azimuthal angular sector in front of the position of the tower. That is, during rotation, the rotor blades pass the critical sector before they pass the tower. For example, the position of the tower is assigned an azimuthal angle of α and the critical sector reaches from (α - ϕ) to α, wherein ϕ is, for example, 10° or 30° or 45° or 60°. Herein, the azimuthal angle or position refers to the rotor plane. The critical sector may also cover azimuthal angles after the position of the tower.

The third information is determined depending on the first and the second information. That is, the first and the second information are used to determine directly or indirectly whether the bending moment of at least one rotor blade exceeds the respective maximum allowed bending moment when said rotor blade is in the critical sector. Determining the third information may be done in real time, i.e. immediately after providing the first and the second information.

For example, the third information is determined within a time interval which is at most 1 s after the measurements for the first information.

The first information may be provided continuously, for example at least 10 times or at least 100 times per full rotation of the rotor. For each first information, the step of determining the third information may be executed.

By way of example, for each provided first information, it is firstly determined whether one of the rotor blades is in the critical sector, and only if this is the case is it determined whether the bending moment of that rotor blade exceeds the maximum allowed bending moment.

If the third information is representative for the bending moment of at least one rotor blade to exceed the respective maximum allowed bending moment when said rotor blade is in the critical sector, an output signal is generated. The output signal is, in particular, an electric signal which can be transmitted via a wire or wirelessly. The output signal is configured to cause the pitch setting system to individually change the pitch angles of the rotor blades in order to reduce the deflection of the rotor blades towards the tower when they pass the tower.

Herein, the moment when a rotor blade passes the tower is the moment when the rotor blade is in the position in which said rotor blade is most parallel to the tower, i.e. when the length axis of the rotor blade is most aligned or most parallel with the length axis of the tower. For example, in this position, the tip of the rotor blade is closest to the tower and/or to the ground. For example, the position when the rotor blade is most parallel to the tower is assigned an azimuthal position of the rotor of 0° and/or 120° and/or 240°.

"To individually change the pitch angles of the rotor blades" means that the pitch angle of each rotor blade is changed/set independently of the pitch angle(s) of the other rotor blade(s) of the rotor. Thus, the pitch angle of one rotor blade may be changed without simultaneously changing the pitch angle of another rotor blade. For example, the output signal is configured to change the pitch angle of that rotor blade which passes the tower or which is in the critical sector, respectively, while the pitch angle(s) of the other rotor blade(s) are not changed. For example, the output signal is configured such that it causes the pitch setting system to change the pitch angles of all rotor blades, e.g. by the same amount, but timely phase-shifted. For example, every time a rotor blade passes the tower, only the pitch angle of that rotor blade, and already before that rotor blade passes the tower, is changed. After the rotor blade has passed the tower, the pitch angle of the rotor blade may be changed back to its initial value. The same may be done for the next rotor blade passing the tower and so on.

Thus, the pitch angle of each rotor blade may only be changed for the time the rotor blade is in an azimuthal angular sector close to the tower, e.g. when the rotor blade is within the azimuthal angular sector from (α - ϕ') to (α + ϕ'), wherein ϕ' may be at most 60° or at most 45° and/or at least 10°.

The generation of the output signal and, optionally, also the setting of the pitch angles may be done in real time. It may be done within a time interval after determination of the third information which is shorter than the time interval for a full rotation or for half a rotation or for a quarter of a rotation of the rotor, e.g. within a time interval of at most 0.5 s.

The determination of the third information, the generation of the output signal and, possibly, also the individual change of the pitch angles of the rotor blades may be executed after providing the first information, e.g. after the measurements for the first information have been taken, but before the rotor blade with the too large bending moment actually passes the tower. Alternatively, the steps may be executed after said rotor blade has actually passed the tower but before it passes the tower again.

The pitch angle of a rotor blade is defined, for example, as the angle between the chord line of the rotor blade and the plane of rotation of the rotor (rotor plane). The change of the pitch angle of the rotor blade is, for example, such that the angle of attack of the rotor blade is reduced.

According to a further embodiment, the rotor comprises exactly three rotor blades.

According to a further embodiment, when the third information is representative for the bending moment of at least one rotor blade to exceed the respective maximum allowed bending moment when said rotor blade is in the critical sector, the method further comprises a step in which fourth information is determined depending on the first information. The fourth information is representative for the tilt bending moment of the rotor.

The tilt bending moment for which the fourth information is representative may be an estimation of the actual tilt bending moment of the rotor. The tilt bending moment of the rotor is a quantity in a fixed reference frame, i.e. a reference frame which is fixed with respect to the environment and/or with respect to the tower. The tilt bending moment is the moment acting on the rotor in order to tilt the rotor plane around an axis running parallel to the ground and parallel to the rotor plane.

According to a further embodiment, the method comprises a step in which fifth information is provide. The fifth information is representative for a reference tilt bending moment of the rotor. The reference tilt bending moment is a tilt bending moment of the rotor, in which the deflection of the rotor blades towards the tower when passing the tower is reduced compared to the tilt bending moment for which the fourth information is representative. The reference tilt bending moment is, for example, determined depending on simulations and/or depending on the fourth information. The reference tilt bending moment may be a fixed value.

According to a further embodiment, the output signal is determined based on the fourth information and the fifth information. For example, it is determined how much the pitch angles of the rotor blades have to be changed when passing the tower in order to make the tilt bending moment to approach or to be the reference tilt bending moment.

Determining the output signal depending on the fourth and the fifth information, i.e. depending on tilt bending moments, is easier, faster and requires less calculation steps than determining the output signal directly from the first information, i.e. from the bending moments of the individual rotor blades.

According to a further embodiment, the fourth information is determined depending on the first information with the help of a first coordinate transformation from a rotating reference frame to a fixed reference frame. With the help of the coordinate transformation, the bending moments of the rotor blades can be translated into the tilt bending moment of the rotor.

The rotating reference frame is, in particular, the above-mentioned reference frame of the rotor blades rotating with the rotor blades and the fixed reference frame is, in particular, the above-mentioned reference frame fixed with respect to the environment or with respect to the tower, respectively.

According to a further embodiment, the output signal is determined based on the fourth and the fifth information using a second coordinate transformation from the fixed reference frame back into the rotating reference frame. The second coordinate transformation is, in particular, the inverse of the first coordinate transformation.

According to a further embodiment, the method comprises a step in which sixth information is determined depending on the fourth information and the fifth information. The sixth information is representative for a necessary pitch angle change in the fixed reference frame in order to have the reference tilt bending moment acting on the rotor instead of the tilt bending moment for which the fourth information is representative. The pitch angle change in the fixed reference frame is a quantity well known to the skilled person working in the technical field of pitch control.

According to a further embodiment, the output signal is determined with the help of transforming the pitch angle change in the fixed reference frame into individual pitch angle changes of the rotor blades in the rotating reference frame by using the second coordinate transformation. The pitch angle changes in the rotating reference frame are the values by which the pitch angles of the rotor blades are to be changed by the pitch setting system.

According to a further embodiment, the first coordinate transformation is a Coleman transformation, also known as DQ transformation or Park transformation.

According to a further embodiment, the second coordinate transformation is an inverse Coleman transformation.

According to a further embodiment, the first information is determined depending on measurements taken with the help of a first sensor system. The first sensor system is, for example, part of the wind turbine. The first sensor system may comprise one or more strain sensors, e.g. optical fiber sensors or strain gauge sensors. Moreover, the first sensor system may comprise a position sensor for measuring the positions of the rotor blades.

According to a further embodiment, the output signal is configured to cause the pitch setting system to change the pitch angle of each rotor blade by a desired pitch angle change for the time the rotor blade needs to pass the tower. The time a rotor blade needs to pass the tower may be defined as the time the rotor blade needs from the azimuthal position of (α - ϕ') to (α + ϕ'). However, the time may be defined differently as well.

According to a further embodiment, the output signal is configured to cause the pitch setting system to change the pitch angle of each rotor blade back by the respective desired pitch angle change after the respective rotor blade has passed the tower and before the respective rotor blade passes the tower again. Thus, during one rotation of the rotor, the pitch angle of each rotor blade is pitched out by the desired pitch angle change and is pitched back by the desired pitch angle change at least once.

The desired pitch angle change is, for example, the same for all rotor blades. The desired pitch angle change is, in particular, the above-mentioned pitch angle change determined from the pitch angle change in the fixed reference frame using the second coordinate transformation.

According to a further embodiment, the output signal is configured to cause the pitch setting system to periodically and/or timely phase-shifted change the pitch angles of the rotor blades. For example, during each rotation of the rotor, the pitch angle of each rotor blade is changed and changed back, e.g. by the desired pitch angle change, and there is a time window between the changes of the pitch angles of each two rotor blades.

By way of example, the periodic and/or timely phase-shifted changes of the pitch angles caused by the output signal lasts for at least two full rotations of the rotor.

Next, the computer program, the computer-readable data carrier and the control device are specified.

According to an embodiment, the computer program comprises instructions which, when the program is executed by a computer, cause the computer to carry out the method for operating a wind turbine according to any one of the embodiments described herein.

According to an embodiment, the computer-readable data carrier has stored thereon the computer program.

According to an embodiment, the control device comprises at least one processor configured to perform the method for operating a wind turbine according to any one of the embodiments described herein. The control device may be a computer, for example. The control device may be part of the wind turbine or may be an external device, which is, for example, several km away from the wind turbine, like a computer in a control station. For example, the control device is configured to communicate with the wind turbine via a wire or wirelessly.

Next, the control system for operating a wind turbine is specified. The control system is, in particular, configured to perform the method according to any one of the embodiments described herein. Therefore, all features disclosed for the method are also disclosed for the control system and vice versa.

According to an embodiment, the control system is a control system for operating a wind turbine which has a rotor with at least two rotor blades, a tower and a pitch setting system for individually setting the pitch angles of the at least two rotor blades. The control system comprises a sensor system configured to take measurements with the help of which the bending moments of the at least two rotor blades and the assigned positions are determinable. The control system further comprises the control device as specified herein. The control device is signally connectable or connected to the sensor system in order to provide the control device with the measurements of the sensor system. The control device is signally connectable or connected to the pitch setting system in order to provide the pitch setting system with the output signal of the control device so that the pitch setting system individually sets the pitch angles of the at least two rotor blades depending on the output signal.

For example, the sensor system is signally connectable or is signally connected with the control device via a wire or wirelessly. The sensor system and/or control device may be part of the wind turbine, i.e. may be integrated into the wind turbine, or may be external. The control device may be signally connected or connectable to the pitch setting system via wire or wirelessly.

The control device may, accordingly, comprise an interface for receiving data from the sensor system and an interface for sending the output signal.

The pitch setting system may be part of the control system. The pitch setting system comprises, for example, at least one actuator for each of the rotor blades, wherein the actuator is configured to change and/or set the pitch angle of the respective rotor blade.

According to a further embodiment, the sensor system comprises at least one strain sensor per rotor blade. The strain sensor assigned to a rotor blade is coupled to the assigned rotor blade. For example, each rotor blade is assigned at least three or at least four strain sensors. Strain sensors allow the bending moments acting on the rotor blades to be determined. All features disclosed for the at least one strain sensor are herein also disclosed for all other strain sensors.

The strain sensors may be integrated into the respective rotor blade or may be applied to an outer surface of the respective rotor blade. The strain sensors may be temperature compensating strain sensors.

According to a further embodiment, the at least one strain sensor per rotor blade is a fiber optic strain sensor.

According to a further embodiment, the at least one strain sensor per rotor blade is a strain gauge sensor.

The at least two rotor blades may each be assigned several fiber optic strain sensors or several strain gauge sensors or a combination of at least one fiber optic strain sensor and at least one strain gauge sensor.

Next, the wind turbine is specified.

According to an embodiment, the wind turbine comprises a rotor with at least two rotor blades, a tower and a pitch setting system for individually setting the pitch angles of the at least two rotor blades. Furthermore, the wind turbine comprises the control system according to any one of the embodiments described herein.

Hereinafter, the method for operating a wind turbine, the control device, the control system and the wind turbine will be explained in more detail with reference to the drawings on the basis of exemplary embodiments. The accompanying figures are included to provide a further understanding. In the figures, elements of the same structure and/or functionality may be referenced by the same reference signs. It is to be understood that the embodiments shown in the figures are illustrative representations and are not necessarily drawn to scale. In so far as elements or components correspond to one another in terms of their function in different figures, the description thereof is not repeated for each of the following figures. For the sake of clarity, elements might not appear with corresponding reference symbols in all figures.
Figure 1 shows an exemplary embodiment of a wind turbine,
Figure 2 and 3 show the behavior of an exemplary embodiment of the wind turbine during operation at different conditions,
Figure 4 shows a flowchart of an exemplary embodiment of the method for operating a wind turbine,
Figure 5 shows a flowchart of a further exemplary embodiment of the method for operating a wind turbine,
Figure 6 shows an exemplary embodiment of a wind turbine 100 during operation in front view,
Figure 7 shows an exemplary embodiment of the control system and the control device,
Figure 8 shows an exemplary embodiment of an individual pitch control,
Figures 9 and 10 show further exemplary embodiments of the method for operating a wind turbine.

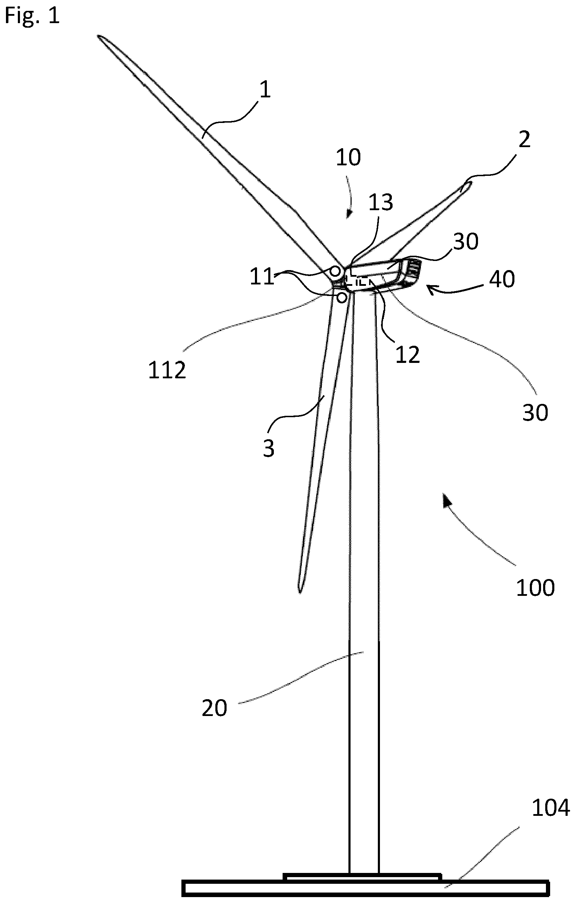

Figure 1 shows a schematic view of an exemplary embodiment of a wind turbine 100 which comprises a tower 20. The tower 20 is fixed to the ground by means of a foundation 104. At one end of the tower 20, opposite to the ground, a nacelle 106 is rotatably mounted. The nacelle 106, for example, comprises a generator which is coupled to a rotor 10 via a gearbox (not shown). The rotor 10 comprises one or more (wind turbine) rotor blades 1, 2, 3, which are arranged on a rotor hub 112, said rotor hub 112 being connected to a rotor shaft (not shown).

During operation, the rotor 10 is set in rotation by an air flow, for example wind. This rotational movement is transmitted to the generator via the rotor shaft and the gearbox. The generator converts the mechanical energy of the rotor 10 into electrical energy.

In order to set the rotational velocity and the power consumption, the wind turbine 100 comprises a pitch setting system 13 which is configured to set the pitch angles of the rotor blades 1, 2, 3. The pitch setting system 13 is configured to set the pitch angle of each rotor blade 1, 2, 3 individually. For example, the pitch setting system 13 comprises at least one actuator for each rotor blade 1, 2, 3 via which an electrical signal is translated into a mechanical movement of the respective rotor blade 1, 2, 3.

The wind turbine 100 further comprises a control system 40 configured to operate the wind turbine 100. The control system 40 comprises a first sensor system 11, a second sensor system 12, and a control device 30.

The first sensor system 11 comprises, for example, three or four strain sensors for each rotor blade 1, 2, 3, wherein the strain sensors are coupled to the respective rotor blade 1, 2, 3. The strain sensors may be fiber optic strain sensors, for example. The measurement signals from the strain sensors may be used to estimate/determine the bending moment acting on the respective rotor blade 1, 2, 3. The first sensor system 11 further comprises at least one position sensor for measuring the positions of the rotor blades 1, 2, 3.

The second sensor system 12 comprises, for example, at least one sensor for measuring the pitch angles of the rotor blades 1, 2, 3, at least one sensor for measuring the rotational velocity of the rotor 10 and at least one sensor for measuring the power output of the wind turbine. The measurement signals of these sensors can be used to estimate/determine the wind turbulence intensity at the rotor 10 and/or the thrust force acting on the rotor 10.

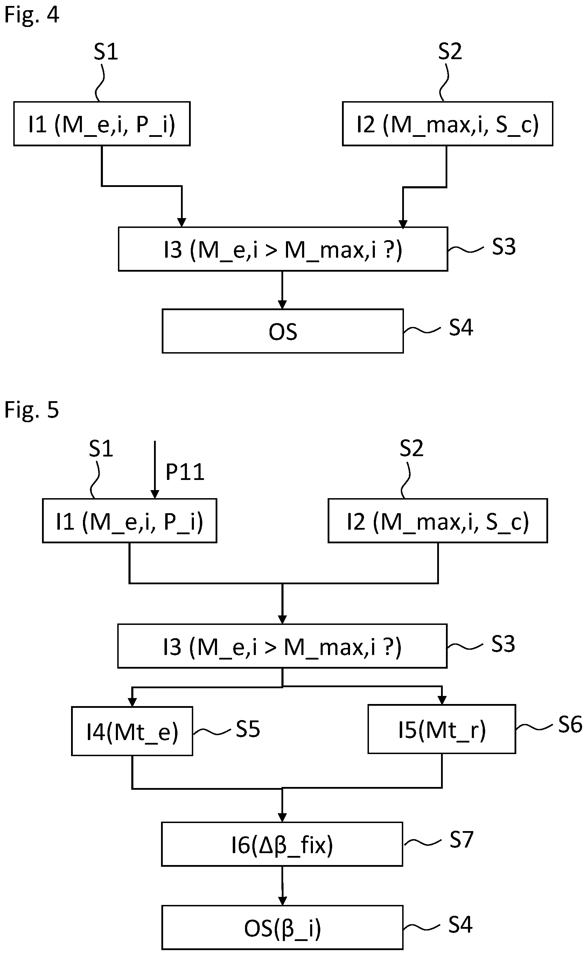

The control device 30 comprises, for example, at least one processor. It may be located in the nacelle 106. The control device 30 is signally coupled to the first sensor system 11, possibly to the second sensor system 12, and to the pitch setting system 13 so that it can communicate with the systems 11, 12, 13. The measurements from the sensor systems 11, 12 are processed by the control device 30 and, depending on this, an output signal is possibly sent to the pitch setting system 13 in order to individually adjust the pitch angles of the rotor blades 1, 2, 3. This will be explained in more detail in connection with figures 4 and 5.

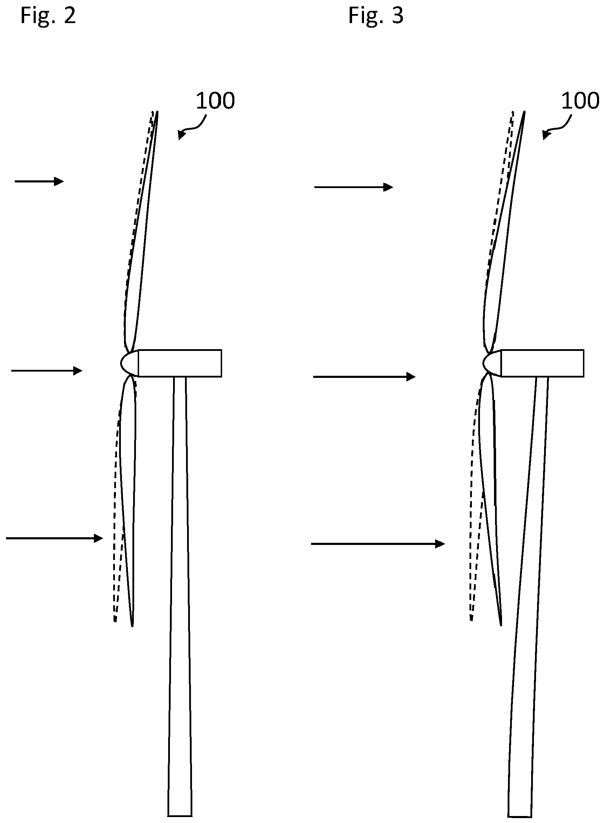

Figure 2 shows the wind turbine 100 from a side view during operation of the wind turbine 100. Wind acting on the wind turbine 100 is indicated by the arrows. As can be seen, the wind has a higher velocity closer to the ground than further away from the ground (so-called negative wind shear). Due to the forces acting on the rotor blades, the rotor blades are deflected with respect to their rest positions (the rest positions are indicated by the dashed lines). Moreover, due to the profile in the wind velocity, the rotor blade passing the tower, i.e. the rotor blade closer to the ground, is deflected more than the rotor blade further away from the tower. Consequently, a tilt bending moment acts on the rotor in order to tilt the rotor plane.

In figure 3, a similar situation as in figure 2 is shown but now with an overall higher wind velocity and corresponding greater wind turbulence intensities. Also in this case, there is a profile in the wind velocity with higher wind velocities closer to the ground. As can be seen, the deflection of the rotor blades is now larger compared to figure 2. Moreover, due to the greater thrust force acting on the rotor, the tower is bended. Due to the higher deflection of the rotor blades and the (greater) bending of the tower, the rotor blades come very close to the tower when passing the tower. This bears the risk of collision. With the method for operating a wind turbine described in the following exemplary embodiments, the risk of a collision can, however, be reduced.

Figure 4 shows a first exemplary embodiment of the method for operating a wind turbine, for example the wind turbine of figure 1. The method comprises a step S1, in which first information 11 is provided and a step S2 in which second information 12 is provided. The steps may be executed at the same time or one after the other.

The first information 11 is representative for bending moments M_e,1, M_e,2, Me_3, M_e,i for short, of the different rotor blades 1, 2, 3 and the assigned position P_1, P_2, P_3, P_i for short. For example, the first information 11 is provided continuously, e.g. at least 10 times or at least 100 times per full rotation so that the bending moments M_e,i at different positions P_i of the rotor blades 1, 2, 3 during each rotation are provided.

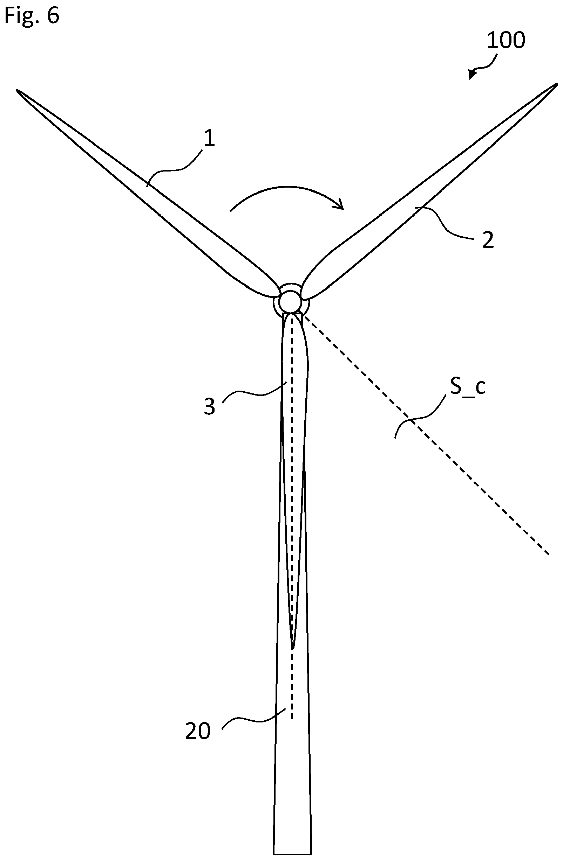

The second information 12 is representative for maximum allowed bending moments M_max,1, M_max, 2, M_max, 3, M_max,i for short, of the rotor blades 1, 2, 3 when the rotor blades 1, 2, 3 are in a critical sector S_c close to the tower 20 (see also figure 6). For example, the second information 12 is representative for maximum allowed bending moments M_max,i of the rotor blades 1, 2, 3 in a critical azimuthal sector S_c of 60° in front of the position of the tower 20.

In step S3, third information 13 is determined based on the first 11 and the second 12 information. The third information 13 is representative for whether the bending moment M_e,i of at least one rotor blade 1, 2, 3 exceeds the respective maximum allowed bending moment M_max,i when said rotor blade 1, 2, 3 is in the critical sector S_c. For example, the bending moments M_e,i of the rotor blades 1, 2, 3 when the rotor blades 1, 2, 3 are in the critical sector S_c are compared with the maximum allowed bending moments M_max,i.

If the third information 13 is representative for the bending moment M_e,i of at least one rotor blade 1, 2, 3 to exceed the maximum allowed bending moment M_max,i when said rotor blade 1, 2, 3 is in the critical sector S_c, a step S4 is executed, in which an output signal OS is generated which is configured to cause the pitch setting system 13 to individually change the pitch angles β_1, β_2, β_3, β_i for short, of the rotor blades 1, 2, 3. This is done in order to reduce a deflection of the rotor blades 1, 2, 3 towards the tower 20 when they pass the tower 20.

Figure 5 shows a second exemplary embodiment of the method for operating a wind turbine. In step S1, the first information 11 is determined depending on measurements P11 taken with the help of the first sensor system 11. The first sensor system 11 measures, for example, the bending moments M_e,i of the different rotor blades 1, 2, 3 and the positions P_i at which the bending moments M_e,i are measured so that the bending moments M_e,i are obtained as a function of the positions P_i of the rotor blades 1, 2, 3.

The steps S2 and S3 are the same as in figure 4. After the step S3, and before the step S4, a step S5 is executed, in which fourth information 14 is determined based on the first information 11. The fourth information 14 is representative for the tilt bending moment Mt_e acting on the rotor 10. For example, the tilt bending moment Mt_e is determined from the bending moments M_e,i of the different rotor blades 1, 2, 3 by using a first coordinate transformation, like a Coleman transformation, from the rotating reference frame of the rotor blades 1, 2, 3 to a reference frame which is fixed with respect to the tower 20.

In a step S6, fifth information 15 is provided which is representative for a reference tilt bending moment Mt_r of the rotor 10. The reference tilt bending moment Mt_r is a tilt bending moment of the rotor 10 for which the deflection of the rotor blades 1, 2, 3 towards the tower 20 when passing the tower 20 is reduced compared to the tilt bending moment Mt_e determined in step S5. The fifth information 15 is, for example, determined depending on the fourth information 14 and/or the third information 13. Alternatively, the reference tilt bending moment Mt_r is a fixed value. For example, the reference tilt bending moment Mt_r is a tilt bending moment which is smaller than the tilt bending moment Mt_e, particularly a tilt bending moment which tries less to tilt the rotor plane towards the tower 20.

In a step S7, sixth information 16 is determined depending on the fourth 14 and the fifth 15 information. The sixth information 16 is representative for a necessary pitch angle change Δβ_fix in the fixed reference frame in order to have the reference tilt bending moment Mt_r acting on the rotor 10 instead of the tilt bending moment Mt_e. The output signal OS is then determined with the help of transforming the necessary pitch angle change Δβ_fix in the fixed reference frame into individual pitch angle changes Δβ_i of the rotor blades 1, 2, 3 in the rotating reference frame (step S4). This may be done by using a second coordinate transformation, e.g. an inverse Coleman transformation.

The previous exemplary embodiments described the case of three rotor blades. However, the method is also applicable to a rotor with only two rotor blades or with more than three rotor blades.

Figure 6 shows an exemplary embodiment of a wind turbine 100 during operation and in front view. Here, the moment is shown when the third rotor blade 3 just passes the tower 20. In this moment, the third rotor blade 3 is parallel to the tower 20. The critical sector S_c is an azimuthal sector in front of and adjoining the position of the tower 20, i.e. a sector the blades 1, 2, 3 pass immediately before they pass the tower 20.

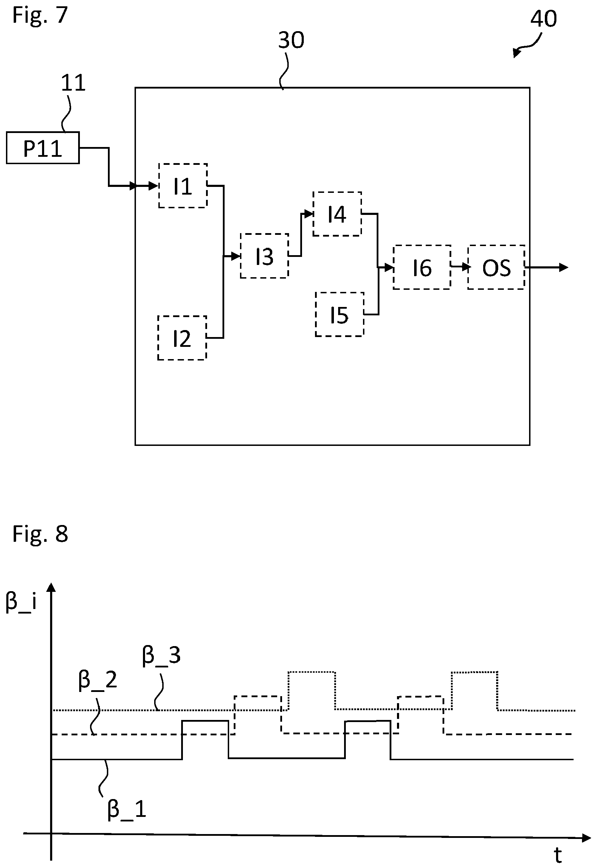

Figure 7 shows an exemplary embodiment of the control system 40. The control system 40 comprises the first sensor system 11, with which the measurements P11 can be taken. These measurements P11 are provided to the control device 30 which performs the method steps as described in connection with figures 4 and 5 and delivers an output signal OS, which the control system 40 then transmits to the pitch setting system 13 of the wind turbine 100 in order to individually adjust the pitch angles β_i.

Figure 8 illustrates an exemplary embodiment of the individual change of the pitch angles β_i performed by the pitch setting system 13 in response to the received output signal OS. The y-axis represents the pitch angles β_i of the rotor blades 1, 2, 3 and the x-axis represents the time t. Figure 7 shows time period of more than two full rotations of the rotor 10.

The solid line represents the pitch angle β_1 of the first rotor blade 1. Shortly before the first rotor blade 1 passes the tower 20, it is determined that its bending moment M_e,1 exceeds the maximum allowed bending moment M_max, 1 and, therefore, the output signal OS is generated which causes the pitch setting system 13 to increase the pitch angle β_1 of the first rotor blade 1 for the time the first rotor blade 1 needs to pass the tower 20. Shortly after the first rotor blade 1 has passed the tower 20, the pitch angle β_1 is changed back to its initial value. Thereafter, the second rotor blade 2 passes the tower 20 and, for this passage, the pitch angle β_2 of the second rotor blade 2 is temporarily increased. Then, the third rotor blade 3 passes the tower and, for this passage, the respective pitch angle β_3 is temporarily increased. Afterwards the first 1, the second 2 and the third 3 rotor blades again pass the tower 20 and the pitch angles are again temporarily changed.

As can be seen in figure 8, the pitch angles are changed individually, periodically and timely phase-shifted by the pitch setting system 13. In the present case, after two full rotations of the rotor 10, none of the rotor blades 1, 2, 3 exceeds the maximum allowed bending moment anymore when the rotor blades are in the critical sector S_c, and, therefore, the periodic change in the pitch angles is stopped.

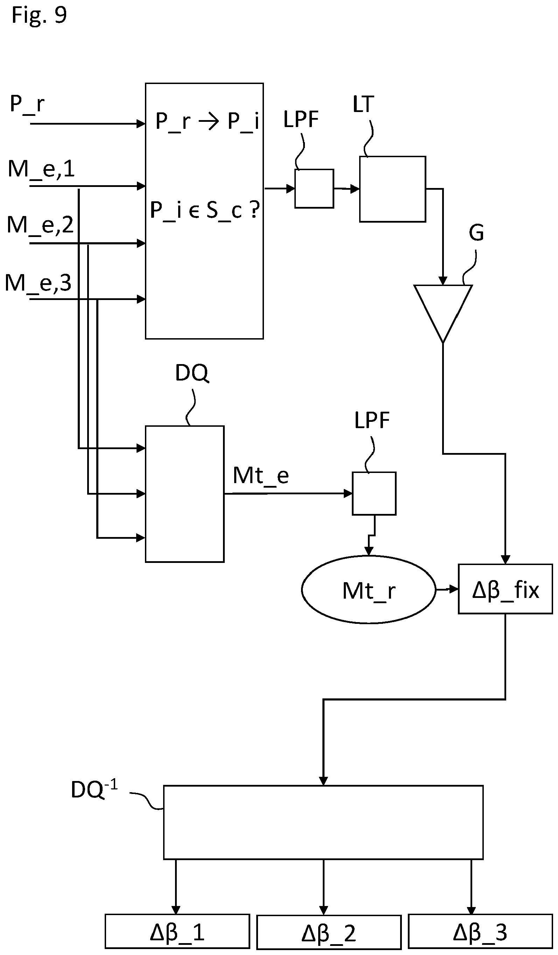

Figure 9 shows a further exemplary embodiment of the method indicating the different calculations performed during the method. The bending moments M_e,1, M_e,2, Me_3 and the position P_r of the rotor 10 are used as starting parameters. The positions P_i of the individual rotor blades 1, 2, 3 can be extracted from the position P_r of the rotor 10. It is then determined whether a rotor blade 1, 2, 3 is in the critical sector S_c. The values of the bending moments M_e,i are then filtered by a low pass filter LPF and, with the help of a lookup table LT, it is determined whether the filtered, bending moment M_e,i of the rotor blade in the critical sector S_c exceeds the respective maximum allowed bending moment M_max,i. From this excess, a gain G is determined which is, for example, between 0 % and 100 %. The gain G defines how aggressively the pitch angles are changed, e.g. how large the desired pitch angle changes Δβ_i should be. 0% means, for example, that there is no excess at all, i.e. the bending moment M_e,i of the rotor blade in the critical sector S_c does not exceed the maximum allowed bending moment M_max,i. Accordingly, the pitch angles β_i are not changed at all.

Parallel to the steps described in the last paragraph, the tilt bending moment Mt_e of the rotor 10 is determined by using a Coleman transformation DQ. The obtained tilt bending moment Mt_e is then filtered by a low pass filter LPF. Furthermore, a reference tilt bending moment Mt_r is provided. Based on the reference tilt bending moment Mt_r, the tilt bending moment Mt_e and the gain G, a pitch angle change Δβ_fix in the fixed reference frame is determined. For example, the pitch angle change Δβ_fix is higher the higher the gain G.

The pitch angle change Δβ_fix in the fixed reference frame is then transformed into the rotating reference frame of the rotor blades 1, 2, 3 using an inverse Coleman transformation DQ⁻¹. From this, the individual pitch angle changes Δβ_i of the different blades 1, 2, 3 are obtained. This information is stored in the output signal OS and transmitted to the pitch setting system 13 in order to individually change the pitch angles β_i of rotor blades 1, 2, 3 according to this information.

By way of example, the method described herein is only performed at the maximum thrust force region which is normally around the knee zone of the wind turbine power curve. For example, the thrust force acting on the rotor 10 is determined depending on average power measurements and pitch measurements or from equivalent thrust force estimation.

The method could be extended with the estimation of the current wind shear using a double calculation of the
tilt moment in both the critical sector close to the tower (as previously described) and in an upper sector of
the rotor, e.g. a sector most distant from the tower.

For shaft load reduction, an activation of the method based on a shear estimation could be used.

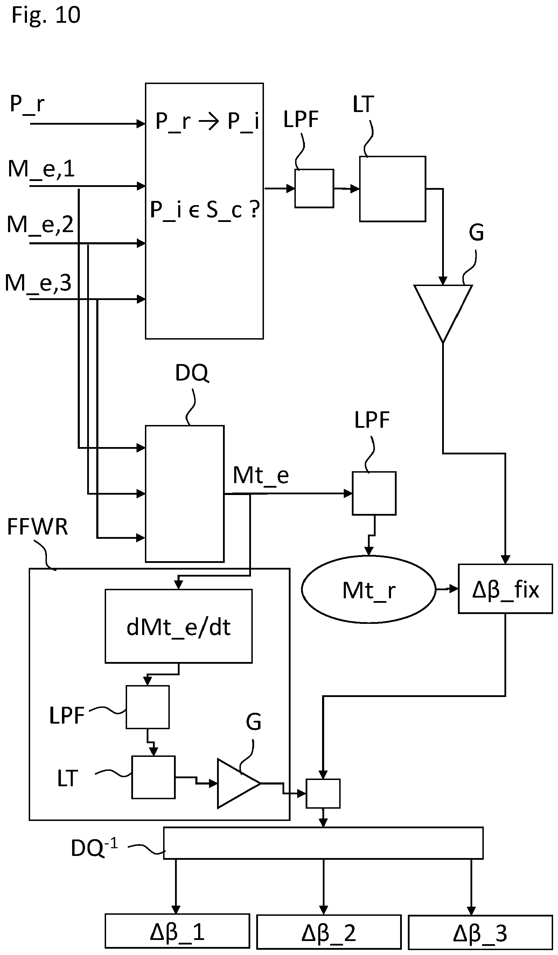

Figure 10 shows a further exemplary embodiment of the method. In addition to what was explained in connection with figure 9, the method comprises the additional execution of a feed-forward element FFWR. The feed-forward element FFWR uses the instant changes in the tilt bending moment dMt_e/dt. These instant changes are filtered and compared with a lookup table LT and, at the maximum activation level of the feed-forward element, the feed-forward element acts with a direct proportion gain G which is additionally added to the information about the pitch angle changed Δβ_fix in fixed frame.

The invention described herein is not limited by the description in conjunction with the exemplary embodiments. Rather, the invention comprises any new feature as well as any combination of features, particularly including any combination of features in the patent claims, even if said feature or said combination per se is not explicitly stated in the patent claims or exemplary embodiments.

### Reference signs

- 1: first rotor blade
- 2: second rotor blade
- 3: third rotor blade
- 10: rotor
- 11: first sensor system
- 12: second sensor system
- 13: pitch control system
- 20: tower
- 30: control device
- 40: control system
- 100: wind turbine
- 104: foundation
- 106: nacelle
- 112: rotor hub

- 11: first information
- 12: second information
- 13: third information
- 14: fourth information
- 15: fifth information
- 16: sixth information
- OS: output signal

- M_e,i: bending moment
- M_max,i: maximum allowed bending moment
- β_i: pitch angle
- Δβ_i: desired pitch angle change
- Mt_e: tilt bending moment
- Mt_r: reference tilt bending moment
- Δβ_fix: pitch angle change in fixed reference frame
- P_i: position of rotor blade i
- P_r: position of rotor 10
- P11: measurements
- S_c: critical sector
- LPF: low pass filter
- LT: look-up table
- DQ: first coordinate transformation
- DQ⁻¹: second coordinate transformation
- G: gain
- dMt_e/dt: instant change in tilt bending moment
- FFWR: feed-forward element

- S1 to S6: method steps

## Claims

1. Method for operating a wind turbine (100) having a rotor (10) with at least two rotor blades (1, 2, 3), a tower (20) and a pitch setting system (13) for individually setting the pitch angles (β_i) of the at least two rotor blades (1, 2, 3), the method comprising
- (S1) providing first information (11) which is representative for bending moments (M_e,i) of the at least two rotor blades (1, 2, 3) and the assigned positions (P_i) of the rotor blades (1, 2, 3),
- (S2) providing second information (12) which is representative for maximum allowed bending moments (M_max,i) of the at least two rotor blades (1, 2, 3) when they are in a critical sector (S_c) close to the tower (20);
- (S3) determining third information (13) depending on the first (11) and the second (12) information, said third information (13) being representative for whether the bending moment (M_e,i) of at least one rotor blade (1, 2, 3) exceeds the respective maximum allowed bending moment (M_max,i) when said rotor blade (1, 2, 3) is in the critical sector (S_c), and, if this the case,
- (S4) generating an output signal (OS) which is configured to cause the pitch setting system (13) to individually change the pitch angles (β_i) of the rotor blades (1, 2, 3) in order reduce a deflection of the rotor blades (1, 2, 3) towards the tower (20) when they pass the tower (20).

2. Method according to claim 1, wherein, when the third information (13) is representative for the bending moment (M_e,i) of at least one rotor blade (1, 2, 3) to exceed the respective maximum allowed bending moment (M_max,i) when said rotor blade is in the critical sector (S_c), the method further comprises
- (S5) determining fourth information (14) depending on the first information (11), wherein the fourth information (14) is representative for the tilt bending moment (Mt_e) of the rotor (10),
- (S6) providing fifth information (15) which is representative for a reference tilt bending moment (Mt_r) of the rotor (10), wherein the reference tilt bending moment (Mt_r) is a tilt bending moment of the rotor (10) for which the deflection of the rotor blades (1, 2, 3) towards the tower (20) when passing the tower (20) is reduced compared to the tilt bending moment (Mt_e), wherein
- the output signal (OS) is determined based on the fourth (14) and the fifth (15) information.

3. Method according to claim 2, wherein
- the fourth information (14) is determined depending on the first information (11) with the help of a first coordinate transformation (DQ) from the rotating reference frame of the at least two rotor blades (1, 2, 3) to a fixed reference,
- the output signal (OS) is determined based on the fourth (14) and the fifth (15) information using a second coordinate transformation (DQ⁻¹) from the fixed reference frame back into the rotating reference frame.

4. Method according to claim 3, wherein
- (S7) sixth information (16) is determined depending on the fourth information (14) and the fifth information (15), the sixth information (16) being representative for a necessary pitch angle change (Δβ_fix) in the fixed reference frame in order to have the reference tilt bending moment (Mt_r) acting on the rotor (10) instead of the tilt bending moment (Mt_e),
- the output signal (OS) is determined with the help of transforming the pitch angle change (Δβ_fix) in the fixed reference frame into individual pitch angle changes (Δβ_i) of the rotor blades (1, 2, 3) in the rotating reference frame by using the second coordinate transformation (DQ⁻¹).

5. Method according to claim 3 or 4, wherein
- the first coordinate transformation (DQ) is a Coleman transformation and the second coordinate transformation (DQ⁻¹) is an inverse Coleman transformation.

6. Method according to any one of the preceding claims, wherein
- the first information (11) is determined depending on measurements (P11) taken with the help of a first sensor system (11).

7. Method according to any one of the preceding claims, wherein
- the output signal (OS) is configured to cause the pitch setting system (13) to
- change the pitch angle (β_i) of each rotor blade (1, 2, 3) by a desired pitch angle change (Δβ_i) for the time the rotor blade (1, 2, 3) needs to pass the tower (20) and
- to change the pitch angle (β_i) of each rotor blade (1, 2, 3) back by the respective desired pitch angle change (Δβ_i) after the respective rotor blade (1, 2, 3) has passed the tower (30) and before the respective rotor blade (1, 2, 3) passes the tower (30) again.

8. Method according to any one of the preceding claims, wherein
- the output signal (OS) is configured to cause the pitch setting system (13) to periodically and timely phase-shifted change the pitch angles (β_i) of the rotor blades (1, 2, 3).

9. Computer program comprising instructions which, when the program is executed by a computer, cause the computer to carry out the method of any one of claims 1 to 8.

10. Computer-readable data carrier having stored thereon the computer program of claim 9.

11. Control device (30) comprising a processor configured to perform the method of any one of claims 1 to 8.

12. Control system (40) for operating a wind turbine (100) having a rotor (10) with at least two rotor blades (1, 2, 3), a tower (20) and a pitch setting system (13) configured to individually set the pitch angles (β_i) of the at least two rotor blades (1, 2, 3), the control system (40) comprising
- a sensor system (11) configured to take measurements (P11) with the help of which the bending moments (M_e,i) of the at least two rotor blades (1, 2, 3) and the assigned positions (P_i) are determinable,
- the control device (30) according to claim 8, wherein
- the control device (30) is signally connectable to the sensor system (11) in order to provide the control device (30) with the measurements (P11) of the sensor system (11),
- the control device (30) is signally connectable to the pitch setting system (13) in order to provide the pitch setting system (13) with the output signal (OS) of the control device (30) so that the pitch setting system (13) individually sets the pitch angles (β_i) of the at least two rotor blades (1, 2, 3) depending on the output signal (OS).

13. Control system (40) according 12, wherein
- the sensor system (11) comprises at least one strain sensor per rotor blade (1, 2, 3), said strain sensor being coupled to the respective rotor blade (1, 2, 3).

14. Control system (40) according to 13, wherein
- the at least one strain sensor per rotor blade (1, 2, 3) is a fiber optic strain sensor.

15. Wind turbine (100) comprising,
- a rotor (10) with at least two rotor blades (1, 2, 3),
- a tower (20),
- a pitch setting system (13) for individually setting the pitch angles (β_i) of the at least two rotor blades (1, 2, 3),
- the control system (40) according to any one of claims 12 to 14.
